# DEMANDE DE BREVET EUROPEEN

(11) **EP 3 239 907 A1**
(43) Date de publication de la demande: **01.11.2017**
(21) Numéro de dépôt: 17167883.2
(22) Date de dépôt: 25.04.2017
(51) Int. Cl.: G06Q 10/02

(54) **PROCÉDÉ D'ORGANISATION DE DÉPLACEMENT DE PASSAGERS DANS UN SYSTÈME DE TRANSPORT, PRODUIT PROGRAMME D'ORDINATEUR ET SYSTÈME D'ORGANISATION ASSOCIÉS**

(30) Priorité: 25.04.2016 FR 1653643
(71) Demandeur: ALSTOM Transport Technologies, 93400 Saint-Ouen (FR)
(72) Inventeur: BOURLAND, Stephane, 92200 NEUILLY S/SEINE (FR)
(74) Mandataire: Lavoix

(57) **Abrégé**

Ce procédé d'organisation de déplacement de passagers est mis en oeuvre par un système informatique et comporte les étapes suivantes :
- collecte (110) de données informatiques relatives à des souhaits de chaque passager d'organisation de son déplacement ;
- traitement (120) des données informatiques collectées pour identifier des souhaits analogues de passagers différents et pour créer une pluralité de groupes de passagers tels que chaque passager de chaque groupe a au moins un souhait analogue à un souhait de chaque autre passager de ce groupe ;
- affectation (140) d'une place dans l'un des véhicules à chaque passager en fonction du ou de chaque groupe auquel il appartient.

## Description

La présente invention concerne un procédé d'organisation de déplacement de passagers dans un système de transport.

La présente invention concerne également un produit programme d'ordinateur et un système d'organisation associés.

Un tel système de transport comprend une pluralité de véhicules permettant de transporter des passagers. Chaque véhicule est notamment un véhicule ferroviaire tel qu'un train effectuant des liaisons régulières entre différents endroits.

De manière générale, pour organiser son déplacement en train, un passager doit effectuer une réservation préalable en choisissant l'endroit de départ, l'endroit d'arrivée, la date et l'heure de départ, la classe de confort, etc.

Une telle réservation est gérée généralement par un système informatique de réservation qui attribue alors une place au passager en fonction du nombre de places disponibles dans le train choisi.

Lorsque le train choisi est complet, le système peut proposer au passager un autre train effectuant le même trajet ou un trajet similaire dans un autre horaire.

Il existe par ailleurs des systèmes de réservation permettant de prendre en compte certains autres souhaits du passager lors de la procédure de réservation. Ces souhaits comprennent notamment des préférences du passager relatives à son emplacement dans le train ou à d'autres services à bord du train comme par exemple un repas à bord.

Dans ce cas, le système de réservation analyse si les souhaits du passager peuvent être respectés en vérifiant notamment la disponibilité de l'emplacement souhaité, des services demandés, etc.

Lorsque ces souhaits ne peuvent pas être satisfaits, le système de réservation en informe le passager.

On conçoit alors qu'un tel système de réservation n'est pas suffisamment flexible et ne permet pas de satisfaire les souhaits du passager de manière satisfaisante. En outre, l'organisation de déplacement d'un grand nombre de passagers ayant des souhaits différents en utilisant un tel système est relativement complexe.

La présente invention a pour but de proposer un procédé d'organisation de déplacement de passagers permettant de faciliter considérablement l'organisation d'un tel déplacement dans un système de transport tout en respectant au mieux les souhaits des passagers.

À cet effet, l'invention a pour objet un procédé d'organisation de déplacement de passagers dans un système de transport comportant une pluralité de véhicules ;
le procédé étant mis en oeuvre par un système informatique et comportant les étapes suivantes :
   - collecte de données informatiques relatives à des souhaits de chaque passager d'organisation de son déplacement ;
   - traitement des données informatiques collectées pour identifier des souhaits analogues de passagers différents et pour créer une pluralité de groupes de passagers tels que chaque passager de chaque groupe a au moins un souhait analogue à un souhait de chaque autre passager de ce groupe ;
   - affectation d'une place dans l'un des véhicules à chaque passager en fonction du ou de chaque groupe auquel il appartient.

Suivant d'autres aspects avantageux de l'invention, le procédé d'organisation comprend une ou plusieurs des caractéristiques suivantes, prise(s) isolément ou suivant toutes les combinaisons techniquement possibles :
- chaque souhait correspond à l'un des éléments choisis dans le groupe consistant en : endroit de départ, endroit d'arrivée, date de départ, date d'arrivée, heure de départ, heure d'arrivée, temps maximal du trajet, classe de confort dans le véhicule, emplacement dans le véhicule, ambiance dans le véhicule, proximité d'un passager ou d'un groupe de passagers, besoin spécifique de service, service avant le départ, service à bord du véhicule, service après l'arrivée, quantité de bagages, poids de chaque bagage, tarif maximal, accord sur téléchargement de données personnelles du passager à partir d'un réseau social, flexibilité de l'un ou de plusieurs éléments précités ;
- chaque souhait est associé à un type choisi dans le groupe consistant en : type impératif, type préférence, et type proposition ;
- l'affectation d'une place à chaque passager est effectuée en respectant tous les souhaits de type impératif de ce passager ;
- une étape de communication comprenant l'émission, à un passager, d'une proposition de modification de l'un ou de plusieurs de ses souhaits de type impératif ;
- une étape de communication comprenant l'émission de souhaits de type proposition d'un passager aux autres passagers ou d'une proposition à l'initiative d'un gestionnaire du système informatique en fonction des souhaits et des profils des passagers ;
- une étape de détermination d'une nouvelle configuration d'aménagement intérieur d'un véhicule permettant de respecter plus de souhaits notamment de type préférence ou de type proposition de chaque passager d'au moins un groupe de passagers ; et
- chaque véhicule est un véhicule ferroviaire.

L'invention a également pour objet un produit programme d'ordinateur comportant des instructions logicielles qui, lorsque mises en oeuvre par un équipement informatique, mettent en oeuvre un procédé tel que défini ci-dessus.

L'invention a également pour objet un système d'organisation de déplacement de passagers dans un système de transport comportant une pluralité de véhicules. Le système d'organisation comporte une unité de communication apte à collecter des données informatiques relatives à des souhaits de chaque passager d'organisation de son déplacement ; et une unité de traitement apte à traiter des données informatiques collectées pour identifier des souhaits analogues de passagers différents et pour créer une pluralité de groupes de passagers tels que chaque passager de chaque groupe a au moins un souhait analogue à un souhait de chaque autre passager de ce groupe ; et affecter une place dans l'un des véhicules à chaque passager en fonction du ou de chaque groupe auquel il appartient.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système d'organisation selon l'invention ; et
- la figure 2 est un organigramme d'un procédé d'organisation mis en oeuvre par le système de la figure 1.

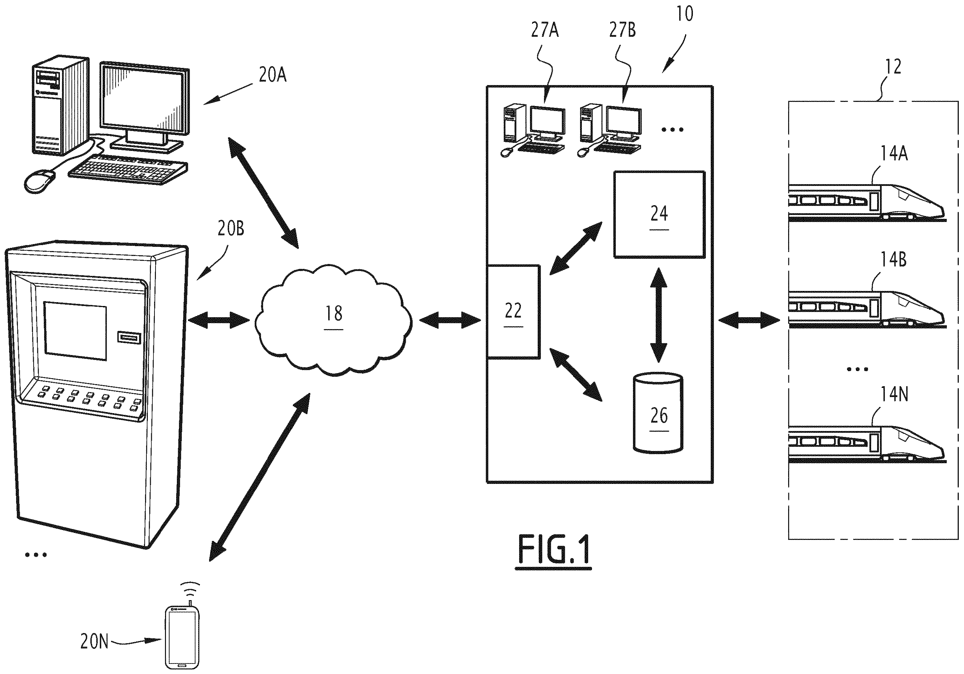

On a en effet illustré sur la figure 1 un système d'organisation de déplacement de passagers 10.

Ce système d'organisation 10 permet d'organiser le déplacement d'un grand nombre, par exemple supérieur à 100, avantageusement supérieur à 300, de passagers dans un système de transport 12.

Le système de transport 12 comprend une pluralité de véhicules permettant de transporter les passagers.

Chaque véhicule est par exemple un véhicule ferroviaire, notamment un train 14A à 14N illustré sur la figure 1. Un tel train 14A à 14N effectue par exemple des liaisons régulières entre différents endroits.

Toutefois, il doit être compris que l'invention reste applicable à tout autre type de véhicules tels que des autocars, des avions, etc.

En outre, selon l'invention, le système de transport 12 peut comprendre des véhicules de types différents comme par exemple des trains et des autocars.

Chaque train 14A à 14N comporte une pluralité de voitures. Chaque voiture comprend un aménagement intérieur composé notamment d'une pluralité de sièges pour les passagers, des sanitaires, des emplacements pour les bagages, etc.

Chaque siège correspond à l'emplacement d'un passager dans le train.

Ainsi, par la suite, on comprend par « place de passager dans un train », l'emplacement de ce passager dans ce train et notamment le siège de ce passager dans ce train. Les places (sièges, banquettes, assises relevables, appuis ischiatiques...) sont par exemple numérotées et peuvent être repérées de manière unique dans le train correspondant.

Chaque passager peut alors réserver une place à bord de l'un des trains 14A à 14N à travers une procédure de réservation comme ceci sera expliqué par la suite.

L'aménagement intérieur d'au moins une voiture de chaque train 14A à 14N peut comprendre un bar ou tout autre point de vente ou de distribution de produits de consommation (lecture, autres services...), notamment alimentaires à bord.

De manière connue en soi, les aménagements intérieurs de différentes voitures sont composés d'espaces différents en fonction d'une classe de confort attribuée à chaque espace.

Selon une variante de réalisation, au moins un train 14A à 14N présente un aménagement intérieur modulable. Ainsi, un tel aménagement intérieur peut être modifié pour chaque trajet du train correspondant 14A à 14N en fonction par exemple des souhaits de passagers comme cela sera expliqué par la suite.

En particulier, un tel aménagement modulable permet de modifier la classe de confort d'un espace d'une voiture, le nombre de sièges, l'orientation de sièges, la distance entre les sièges, etc.

Pour simplifier la lecture de la description par la suite, il sera considéré que tous les trains 14A à 14N partent le même jour et effectuent des trajets similaires. Toutefois, il doit être compris que dans le cas général, le système de transport 12 présente une structure plus complexe et inclut notamment des véhicules circulant selon des horaires différents et effectuant des trajets différents.

En particulier, le train 14A effectue par exemple un trajet entre une gare A et une gare B selon un horaire prédéterminé, par exemple en partant de la gare A à 17h52.

Le train 14B effectue le même trajet que le train 14A, c'est-à-dire, le trajet entre la gare A et la gare B selon un autre horaire prédéterminé, par exemple en partant de la gare A à 18h30.

Finalement, le train 14N effectue un trajet similaire, c'est-à-dire par exemple un trajet entre la gare A ou une gare D proche de la gare A et une gare C proche de la gare B. L'heure de départ de ce train de la gare A ou D est par exemple 19h00.

Le système d'organisation 10 est un système informatique tel qu'un calculateur ou une pluralité de calculateurs.

Le système d'organisation 10 est notamment raccordé à un réseau informatique global 18 tel qu'Internet permettant sa communication avec des terminaux locaux de passager 20A à 20N.

En particulier, comme cela est illustré sur la figure 1, le système d'organisation comporte une unité de communication 22, une unité de traitement de données informatiques 24, une base de données informatiques 26 et éventuellement une ou plusieurs consoles 27A, 27B.

L'unité de communication 22 est par exemple une interface de connexion avec le réseau informatique 18. Une telle interface de connexion permet notamment l'échange de données informatiques avec le réseau informatique 18.

La base de données 26 présente par exemple un moyen de stockage apte à stocker des données informatiques issues de l'unité de communication 22 ou de l'unité de traitement 24.

L'unité de traitement 24 permet de traiter des données informatiques reçues via l'unité de communication 22 ou stockées dans la base de données 26 pour mettre en oeuvre au moins certaines étapes d'un procédé d'organisation décrit en détail par la suite.

Les consoles 27A, 27B permettent à un gestionnaire ou à un opérateur d'intervenir au fonctionnement du système d'organisation 10.

Chaque terminal de passager 20A à 20N présente par exemple un calculateur connecté au réseau informatique 18 et apte à mettre en oeuvre un logiciel de communication adapté pour communiquer avec le système d'organisation 10 via le réseau informatique 18.

Dans l'exemple de réalisation de la figure 1, le terminal local 20A est un ordinateur installé par exemple au domicile d'un passager, le terminal local 20B est un terminal de réservation installé dans une gare et le terminal local 20N est un téléphone intelligent portable.

Le logiciel de communication présente par exemple une application intégrée au moins partiellement dans un réseau social.

Bien entendu, d'autres exemples de réalisation des terminaux locaux de communication sont également possibles.

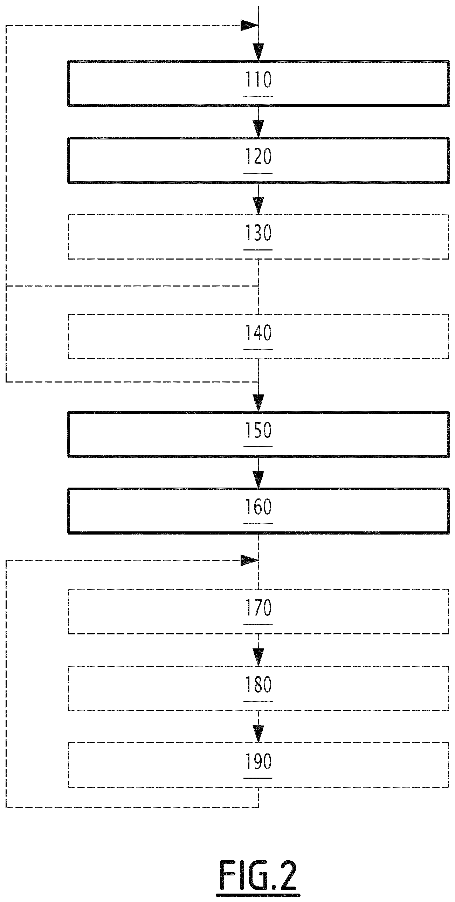

Le procédé d'organisation mis en oeuvre par le système d'organisation 10 sera désormais expliqué en référence à la figure 2 présentant un organigramme de ses étapes.

Initialement, la date de départ ainsi que les trajets de l'ensemble des trains 14A à 14N sont déterminés.

L'étape 110 initiale du procédé d'organisation consiste à collecter des données informatiques relatives à des souhaits des passagers d'organisation de leurs déplacements avec l'un des trains 14A à 14N.

En particulier, cette étape 110 est mise en oeuvre lorsque les logiciels de communication avec le système d'organisation 10 des terminaux 20A à 20N donnent accès aux passagers à la procédure de réservation de leurs déplacements pour la date déterminée.

L'ouverture de la procédure de réservation est par exemple programmée de manière automatique trois mois avant la date de départ déterminée.

En particulier, lors de la procédure de réservation, chaque passager effectue une réservation de son déplacement pour la date déterminée en indiquant au logiciel de communication correspondant un certain nombre de souhaits d'organisation de son déplacement.

Chaque souhait est relatif par exemple à l'un des éléments choisi dans le groupe comprenant au moins :
- endroit de départ ;
- endroit d'arrivée ;
- date de départ ;
- date d'arrivée ;
- heure de départ ;
- heure d'arrivée ;
- temps maximal du trajet ;
- classe de confort dans le train ;
- emplacement dans le train ;
- ambiance dans le train (calme, famille, etc.)
- proximité (personne(s), groupe, etc.) ;
- besoin spécifique de service (place pour une personne à mobilité réduite, suggestion du passager à un gestionnaire du système informatique etc.)
- service avant le départ ;
- service à bord du train (repas) ;
- service après l'arrivée ;
- quantité de bagages ;
- poids de chaque bagage ;
- tarif maximal ou choix dans une grille tarifaire ;
- accord sur téléchargement de données personnelles du passager à partir d'un réseau social ;
- flexibilité de l'un ou de plusieurs éléments précités.

Les besoins spécifiques de service comprennent notamment la suggestion par un passager, à l'opérateur, de la création d'un groupe de passagers ou d'une ambiance dans le train.

Lors de la procédure de réservation, le passager associe en outre à chaque souhait indiqué un type. Chaque type est choisi dans le groupe comprenant :
- type impératif ;
- type préférence ; et
- type proposition.

Les souhaits de type impératif sont par exemple choisis dans une liste de souhaits prédéterminée et doivent être impérativement respectés par le système d'organisation 10.

Ainsi, par exemple, le passager peut indiquer que ses souhaits relatifs à l'endroit de départ, à l'endroit d'arrivée et à la date de départ sont de type impératif.

Les souhaits de type préférence sont par exemple choisis dans une liste de souhaits prédéterminée et doivent être respectés de manière préférentielle par le système d'organisation 10.

Ainsi, par exemple, le passager peut indiquer que ses souhaits relatifs à l'heure de départ et à la classe de confort sont de type préférence.

Les souhaits de type proposition peuvent être librement exprimés par le passager et doivent être pris en compte par le système d'organisation 10 de manière préférentielle.

Ainsi, par exemple, le passager peut indiquer son souhait d'être placé dans le train à côté de supporters d'une équipe sportive ou à côté d'un passager X ou de plusieurs passagers Y et Z.

Le passager peut par ailleurs indiquer son souhait d'avoir un moyen de transport lui permettant de regagner sa destination finale après l'arrivée à la gare de destination ou encore d'avoir un service particulier à bord du train (accès internet, par exemple).

De nombreux autres exemples de souhaits de type proposition sont également possibles.

Lorsque la procédure de réservation est terminée, le logiciel de communication correspondant transmet les souhaits indiqués par le passager ainsi que les types associés au système d'organisation 10 via le réseau informatique 18 sous la forme de données informatiques. Le système garantie alors au passager une prestation répondant aux choix de type impératif.

L'unité de communication 22 du système d'organisation 10 reçoit alors l'ensemble des données informatiques transmises par les logiciels de communication des terminaux locaux 20A à 20N des passagers ayant terminé la procédure de réservation.

Puis, l'unité de communication 22 stocke l'ensemble des données informatiques reçues dans la base de données 26.

L'étape 120 suivante est mise en oeuvre lorsque les données informatiques relatives à des souhaits d'un nombre prédéterminé de passagers ont été collectées par le système d'organisation 10.

Autrement dit, l'étape 120 est mise en oeuvre lorsqu'un nombre prédéterminé de passagers ont terminé la procédure de réservation.

Ce nombre prédéterminé correspond par exemple à la moitié de la capacité totale des trains 14A à 14N.

Lors de cette étape 120, l'unité de traitement 24 extrait les données informatiques correspondantes de la base de données 26 pour notamment analyser l'ensemble des souhaits transmis par les passagers.

En particulier, l'unité de traitement 24 identifie d'abord des souhaits analogues de passagers différents.

On comprend par « souhaits analogues », des souhaits identiques ou des souhaits proches selon un critère de proximité prédéterminée pour chaque souhait relatif à l'un des éléments de la liste précitée.

Ainsi par exemple, le souhait indiquant 17h52 comme l'heure de départ et le souhait indiquant 18h00 comme l'heure de départ, sont considérés comme analogues.

Le souhait du passager Y d'être placé à côté du passager X et le souhait du passager X d'être placé à côté du passager Y, sont considérés comme analogues.

Le souhait d'un passager d'être placé à côté d'amateurs de sport et le souhait d'un autre passager d'être placé à côté de supporters d'une équipe sportive sont également considérés comme analogues. En revanche, le souhait d'un passager d'être placé à côté de supporters d'une équipe et le souhait d'un autre passager d'être placé à côté de supporters d'une équipe adversaire, ne sont pas considérés comme analogues.

Le souhait d'un passager d'avoir un moyen de transport jusqu'à sa destination finale après l'arrivée à la gare et le souhait d'un autre passager d'avoir un moyen de transport jusqu'à un endroit proche à la destination finale de ce premier passager, sont considérés comme analogues.

Les critères de proximité des souhaits peuvent alors être établis pour chaque trajet et chaque date de départ de manière indépendante. Ainsi, par exemple, deux équipes sportives sont considérés adversaires uniquement lorsqu'elles jouent l'une contre l'autre à la date de départ.

Après avoir identifiés des souhaits analogues, l'unité de traitement 24 constitue des groupes de passagers ayant des souhaits analogues.

En particulier, un passager peut être affecté à plusieurs groupes, par exemple, à un groupe de passagers ayant tous le souhait de partir avec le train 14A, c'est-à-dire, à 17h52, et à un groupe de passagers étant tous des supporters d'une équipe sportive et souhaitant être placé ensemble.

Selon un exemple de réalisation, le procédé d'organisation comprend en outre une étape optionnelle 130 de communication avec les passagers, mise en oeuvre par l'unité de traitement 24.

En particulier, lors de cette étape, l'unité de traitement 24 génère des propositions en fonction des capacités des trains 14A à 14N et en fonction des souhaits indiqués par les passagers.

Les propositions sont, par exemple, générées en fonction de données personnelles des passagers, téléchargées à partir d'un réseau social, lorsque les passagers ont donné leur accord sur le téléchargement.

Avantageusement, l'unité de traitement 24 génère également des propositions supplémentaires en fonction de suggestions émises par les passagers (sous la forme de souhaits correspondant à des besoins spécifiques de service) et retenues par le gestionnaire du système informatique, par exemple suivant le nombre de suggestions identiques reçues.

Notamment, lors de cette étape, l'unité de traitement 24 émet des propositions destinées aux passagers de modification d'au moins certains de leurs souhaits ou du type de ces souhaits et propose des opportunités avec des nouveaux souhaits possibles

Pour ce faire, l'unité de traitement 24 analyse l'ensemble des souhaits transmis et identifie des voies d'optimisation selon des méthodes d'optimisation connues en soi.

Chaque voie d'optimisation permet par exemple de satisfaire au mieux les souhaits de chaque passager ou au moins d'un groupe de passagers, ou d'optimiser le remplissage des trains 14A à 14N.

Ainsi, par exemple, l'unité de traitement 24 peut émettre à un passager une proposition de changement de l'un de ses souhaits de type impératif contre un avantage ou une rémunération.

Dans ce cas, si le souhait du passager consistait par exemple à partir impérativement avec le train 14A, c'est-à-dire à 17h52, l'unité de traitement 24 peut proposer à ce passager de partir avec le train 14B, c'est-à-dire à 18h30, contre un avantage ou une rémunération, lorsque par exemple la demande sur le train 14A est élevée alors que le train 14B est peu rempli.

Selon encore un exemple de réalisation, lors de cette étape 130, l'unité de traitement 24 émet à tous les passagers ou au moins à certains d'entre eux, une proposition correspondant à un souhait de type proposition transmis par un passager lors de l'étape 110.

Ainsi, par exemple, lorsqu'un passager a émis un souhait de type proposition consistant à trouver un moyen de transport lui permettant de regagner sa destination finale, l'unité de traitement 24 peut émettre une proposition à tous les autres passagers ayant des souhaits similaires de partager par exemple un taxi avec ce passager.

Une autre proposition peut être adressée au passager Z suite au souhait du passager X d'être placé à côté du passager Z. Dans ce cas, l'unité de traitement 24 propose au passager Z de confirmer son souhait d'être placé à côté de X.

Les passagers reçoivent alors les propositions émises par l'unité de traitement 24 et les acceptent ou non. Les réponses à ces propositions sont ensuite transmises sous la forme de données informatiques et les étapes de collecte 110 et de traitement 120 de ces données sont alors à nouveau mises en oeuvre.

Lors de cette étape, le système d'organisation 10 peut être géré au moins partiellement par un gestionnaire ou un opérateur qui peut utiliser les consoles 27A, 27B afin d'analyser les données concernant les souhaits et profils des passagers afin de leur proposer le cas échéant des souhaits et services complémentaires ou pertinents.

L'étape 140 suivante est optionnelle et est mise en oeuvre lorsque l'aménagement intérieur d'au moins une voiture de l'un des trains 14A à 14N est modulable.

Dans ce cas, l'unité de traitement 24 détermine une nouvelle configuration de l'aménagement intérieur de cette voiture permettant par exemple de satisfaire mieux des souhaits des passagers ou d'augmenter la capacité de cette voiture lorsque par exemple la demande sur le train 14A à 14N correspondant est particulièrement élevée.

Ainsi, par exemple, lorsque l'aménagement intérieur de la voiture comportant le bar est modulable et lorsque la demande sur le train correspondant est particulièrement élevée, l'unité de traitement 24 peut déterminer une nouvelle configuration de cette voiture dans laquelle l'aménagement du bar est remplacé par des sièges supplémentaires pour des passagers. Dans ce cas, le bar est par exemple remplacé par un service de restauration mobile dans le train et les étapes de collecte 110 et de traitement 120 sont alors à nouveau mises en oeuvre.

L'étape 150 suivante est mise en oeuvre séparément pour chacun des trains 14A à 14N, par exemple N minutes avant le départ du train 14A à 14N correspondant.

Le nombre N est de préférence compris entre 10 et 60, et est égal par exemple à 20.

Selon une autre variante de réalisation, le nombre N est supérieur à 60, de préférence supérieur à 120 et inférieur ou égal à 1440. Autrement dit, lorsque N est égal à 1440, l'étape 150 est mise en oeuvre 24 heures avant le départ du train 14A à 14N correspondant.

Lors de cette étape 150, l'unité de traitement 24 affecte des places à chaque passager dans le train correspondant.

En particulier, l'unité de traitement 24 affecte une place à un passager selon le ou chaque groupe associé à ce passager lors de l'étape 120 et selon les souhaits de ce passager.

Cette affectation s'effectue en respectant les souhaits de type impératif du passager et en respectant au mieux les souhaits de type préférence et de type proposition.

Ainsi, par exemple, lorsqu'un passager est associé à un groupe de supporters d'une équipe sportive, sa place se trouvera à proximité de ceux-ci lorsque c'est possible compte tenu de ses autres souhaits, des souhaits des autres passagers, et de la capacité du train correspondant.

Lors de l'étape 160 suivante, l'unité de communication 22 communique le numéro de la place affectée à chacun des passagers.

Ainsi, par exemple, l'unité de communication 22 envoie des données informatiques correspondant à la place affectée via le réseau informatique 18. Dans ce cas, les passagers reçoivent cette information via l'un des terminaux locaux 20A à 20N, de préférence via le téléphone intelligent portable 20N.

Selon une variante de réalisation, les passagers reçoivent cette information via des bornes prévues à cet effet dans la gare de départ ou via tout autre moyen technique adapté par exemples des consoles dans le véhicule lui-même.

En complément, lors de cette étape, l'unité de communication 22 transmet en outre des informations complémentaires relatives au trajet ou à l'accès à la place affectée. L'unité de communication 22 transmet, par exemple, un itinéraire à suivre pour accéder de manière optimale à la place affectée. L'itinéraire correspond par exemple à une carte représentant le train (i.e. les voitures et les portes d'accès aux différentes voitures) et le trajet à emprunter pour accéder à la place affectée.

Les étapes 170 à 190 suivantes sont mises en oeuvre de manière optionnelle séparément pour chacun des trains 14A à 14N après le départ de ce train.

Ces étapes 170 à 190 sont analogues aux étapes 110 à 130 mises en oeuvre avant le départ du train correspondant.

Ainsi, lors de l'étape 170, l'unité de communication 22 collecte des données informatiques relatives à des souhaits émis par des passagers à bord via par exemple un terminal local, tel qu'un téléphone intelligent 20N.

Ces souhaits sont notamment de type proposition et concernent par exemple un changement de la place, de l'ambiance, etc. ou encore la possibilité de regagner la destination finale après l'arrivée du train à la gare de destination.

Lors de l'étape 180 suivante, l'unité de traitement 24 traite l'ensemble des données informatiques collectées durant le trajet pour identifier notamment des souhaits analogues.

Puis, comme lors de l'étape 120, l'unité de traitement 24 forme des groupes de passagers ayant des souhaits analogues.

Ainsi, par exemple, lors de cette étape, l'ensemble des passagers ayant souhaité regagner un endroit D après l'arrivée du train à la gare de destination sont associé à un même groupe.

Lors de la même étape, l'unité de traitement 24 génère en outre des propositions destinées à au moins certains des passagers de modifier au moins certains de leurs souhaits.

Lors de l'étape 190 suivante, l'unité de communication 22 transmet l'ensemble des groupes formés ainsi que les propositions générées aux passagers concernés.

Ces passagers acceptent ou non les propositions reçues en envoyant les réponses correspondantes et éventuellement d'autres souhaits au système d'organisation 10. Les étapes de collecte 170 et d'analyse 180 sont alors à nouveau mises en oeuvre.

Avantageusement, suite à l'arrivée du train à la gare de destination, le procédé comprend une étape de collecte d'avis passagers sur le trajet. Au cours de cette étape, l'unité de communication 22 transmet, par exemple, à chaque passager un formulaire de collecte de l'avis des passagers.

En variante, lors de l'étape 170, l'unité de communication 22 collecte des données informatiques relatives à l'heure d'arrivée estimée du train, transmises par exemple par une unité centrale de gestion du trafic ferroviaire. Dans cette variante, lors de l'étape 180 suivante, en cas de retard du train, l'unité de traitement 24 traite l'ensemble des données informatiques collectées et génère des propositions destinées à au moins certains des passagers. Ces propositions sont notamment destinées aux passagers ayant une correspondance, et concernent des modifications d'au moins certains de leurs souhaits, comme par exemple une proposition d'une nouvelle place dans le train suivant.

Bien entendu, des nombreux autres exemples de réalisation de la présente invention sont également possibles.

On conçoit alors que la présente invention présente un certain nombre d'avantages.

En effet, le procédé et le système d'organisation selon l'invention permettent d'attribuer des places aux passagers selon leurs souhaits.

Ceci permet notamment de gérer efficacement différentes ambiances à l'intérieur d'un véhicule ou d'un groupe de voitures d'un véhicule ou d'une voiture d'un véhicule en regroupant des passagers ayant des intérêts communs.

La capacité du véhicule et l'emplacement des passagers peuvent être alors adaptés pour respecter au mieux les souhaits des passagers.

Chaque passager peut ainsi participer à la création de chaque ambiance pour rendre son trajet plus intéressant.

De plus, différents services peuvent être proposés avant le départ du véhicule, pendant le trajet ou après son arrivée. Ces propositions peuvent prendre en compte les profils et les habitudes des passagers.

En outre, l'invention permet d'optimiser le remplissage des véhicules faisant partie d'un même système de transport. En particulier, l'invention rend flexible l'affectation des places non seulement dans un véhicule mais aussi dans plusieurs véhicules effectuant par exemple des trajets similaires selon des horaires proches.

Finalement, l'invention permet de stocker l'ensemble des données relatives aux souhaits des passagers. Ces données peuvent ensuite être utilisées pour améliorer le service fourni et permettent d'avoir un dialogue permanant entre l'exploitant du système de transport concerné et les passagers.

## Revendications

1. Procédé d'organisation de déplacement de passagers dans un système de transport (12) comportant une pluralité de véhicules (14A,...,14N) ;
le procédé étant mis en oeuvre par un système informatique (10) et comportant les étapes suivantes :
- collecte (110) de données informatiques relatives à des souhaits de chaque passager d'organisation de son déplacement ;
- traitement (120) des données informatiques collectées pour identifier des souhaits analogues de passagers différents et pour créer une pluralité de groupes de passagers tels que chaque passager de chaque groupe a au moins un souhait analogue à un souhait de chaque autre passager de ce groupe ;
- affectation (140) d'une place dans l'un des véhicules (14A,...,14N) à chaque passager en fonction du ou de chaque groupe auquel il appartient.

2. Procédé selon la revendication 1, dans lequel chaque souhait correspond à l'un des éléments choisis dans le groupe consistant en :
- endroit de départ ;
- endroit d'arrivée ;
- date de départ ;
- date d'arrivée ;
- heure de départ ;
- heure d'arrivée ;
- temps maximal du trajet ;
- classe de confort dans le véhicule (14A,...,14N) ;
- emplacement dans le véhicule (14A,...,14N) ;
- ambiance dans le véhicule (14A,...,14N) ;
- proximité d'un passager ou d'un groupe de passagers ;
- besoin spécifique de service ;
- service avant le départ ;
- service à bord du véhicule (14A,...,14N) ;
- service après l'arrivée ;
- quantité de bagages ;
- poids de chaque bagage ;
- tarif maximal ;
- accord sur téléchargement de données personnelles du passager à partir d'un réseau social ;
- flexibilité de l'un ou de plusieurs éléments précités.

3. Procédé selon la revendication 1 ou 2, dans lequel chaque souhait est associé à un type choisi dans le groupe consistant en :
- type impératif ;
- type préférence ; et
- type proposition.

4. Procédé selon la revendication 3, dans lequel l'affectation d'une place à chaque passager est effectuée en respectant tous les souhaits de type impératif de ce passager.

5. Procédé selon la revendication 3 ou 4, comprenant en outre une étape de communication (130) comprenant l'émission, à un passager, d'une proposition de modification de l'un ou de plusieurs de ses souhaits de type impératif.

6. Procédé selon l'une quelconque des revendications 3 à 5, comprenant en outre une étape de communication (130, 190) comprenant l'émission de souhaits de type proposition d'un passager aux autres passagers ou d'une proposition à l'initiative d'un gestionnaire du système informatique (10) en fonction des souhaits et des profils des passagers.

7. Procédé selon l'une quelconque des revendications 3 à 6, comprenant en outre une étape de détermination (140) d'une nouvelle configuration d'aménagement intérieur d'un véhicule (14A,...,14N) permettant de respecter plus de souhaits notamment de type préférence ou de type proposition de chaque passager d'au moins un groupe de passagers.

8. Procédé selon l'une quelconque des revendications précédentes, dans lequel chaque véhicule (14A,...,14N) est un véhicule ferroviaire.

9. Produit programme d'ordinateur comportant des instructions logicielles qui, lorsque mis en oeuvre par un équipement informatique, met en oeuvre le procédé selon l'une quelconque des revendications précédentes.

10. Système d'organisation (10) de déplacement de passagers dans un système de transport (12) comportant une pluralité de véhicules (14A,...,14N) ;
le système d'organisation (10) comportant :
- une unité de communication (22) apte à collecter des données informatiques relatives à des souhaits de chaque passager d'organisation de son déplacement ; et
- une unité de traitement (24) apte à :
+ traiter des données informatiques collectées pour identifier des souhaits analogues de passagers différents et pour créer une pluralité de groupes de passagers tels que chaque passager de chaque groupe a au moins un souhait analogue à un souhait de chaque autre passager de ce groupe ; et
+ affecter une place dans l'un des véhicules (14A,...,14N) à chaque passager en fonction du ou de chaque groupe auquel il appartient.
